# EUROPEAN PATENT APPLICATION

(11) **EP 4 804 291 A1**
(43) Date of publication of application: **09.09.2026**
(21) Application number: 25161290.9
(22) Date of filing: 03.03.2025
(51) Int. Cl.: H01M 10/613, H01M 10/625, H01M 10/6554, H01M 10/658, H01M 50/249, H01M 50/342, H01M 50/367, H01M 50/392

(54) **BATTERY HOUSING WITH VENTING PATH**

(71) Applicant: Volvo Truck Corporation, 405 08 Göteborg (SE)
(72) Inventor: GHOSH, Pramathesh, 422 45 GÖTEBORG (SE); LINDELÖW, Fredrik, 541 94 SKÖVDE (SE); IRANNEZHAD, Mike, 413 30 GÖTEBORG (SE)
(74) Representative: Kransell & Wennborg KB

(57) **Abstract**

A battery housing (100) comprising: a plurality of battery cells (102), each battery cell having a vent (104) positioned to face a first side (106) of the battery housing for releasing exhaust gas during a thermal runaway event; a first compartment (108) disposed adjacent to the vents of the battery cells, the first compartment being air-filled; a second compartment (110) adjacent to the first compartment, on a side of the first compartment opposite the side facing the vents of the battery cells, and in fluid communication with the first compartment via breakable openings (112) located between the first compartment and the second compartment, wherein the second compartment comprises a phase change material (114) configured to be activated when high-velocity particles and/or high-pressure gas ejected from the battery cells break through the breakable openings, and to absorb heat and trap particles released during a thermal runaway event.

## Description

### TECHNICAL FIELD

The disclosure relates generally to energy storage systems for vehicles. In particular aspects, the disclosure relates to a battery housing comprising a vent path for evacuation of gas and particles during a thermal runaway event. The disclosure can be applied to heavy-duty vehicles, such as trucks, buses, and construction equipment, among other vehicle types. The disclosure can also be applied to marine vessels and the like. Although the disclosure may be described with respect to a particular vehicle, the disclosure is not restricted to any particular vehicle.

### BACKGROUND

Rechargeable battery systems are widely used in applications requiring high energy storage capacity, such as electric vehicles, portable electronics, and stationary energy storage systems. As demand for increased energy density and compact battery designs grows, so does the need for efficient thermal management and safety mechanisms.

During normal operation, lithium-ion and other rechargeable battery technologies generate heat due to internal resistance and electrochemical reactions. While passive and active cooling systems help maintain optimal operating temperatures, unforeseen conditions such as overcharging, mechanical damage, or manufacturing defects can lead to thermal runaway. This phenomenon, characterized by rapid heat and gas generation, poses risks of fire, cell rupture, and system failure.

To mitigate such risks, various battery housing designs incorporate venting mechanisms to release built-up gases, thermal management solutions to dissipate excess heat, and structural reinforcements to contain potential failures. These approaches aim to enhance battery reliability, extend service life, and ensure safety in high-energy applications. However, as battery systems evolve to meet increasing performance demands, improved solutions for managing heat, venting, and safety events continue to be an area of active development.

### SUMMARY

According to a first aspect of the disclosure, it is provided a battery housing comprising: a plurality of battery cells, each battery cell having a vent positioned to face a first side of the battery housing for releasing exhaust gas during a thermal runaway event; a first compartment disposed adjacent to the vents of the battery cells, the first compartment being air-filled; a second compartment adjacent to the first compartment, on a side of the first compartment opposite the side facing the vents of the battery cells, and in fluid communication with the first compartment via breakable openings located between the first compartment and the second compartment, wherein the second compartment comprises a phase change material configured to be activated when high-velocity particles and/or high-pressure gas ejected from the battery cells break through the breakable openings, and to absorb heat and trap particles released during a thermal runaway event.

A technical benefit may include improved thermal runaway management by directing exhaust gases and particles away from critical electronic components, reducing the risk of short circuits and fire propagation. The first air-filled compartment allows controlled venting while acting as a buffer zone, preventing immediate exposure of other battery pack components to high-temperature gases. The second compartment, containing a phase change material (PCM), provides heat absorption and particle trapping, thereby mitigating further thermal propagation. The breakable openings ensure a controlled release of gases and particles between compartments, preventing pressure buildup and uncontrolled venting. This design enhances thermal stability, increases battery pack durability, and improves overall safety in high-energy battery applications.

Optionally, in some examples, including in at least one preferred example, the first compartment is configured to direct exhaust gases away from electronic components of the battery pack. A technical benefit may include improved protection of sensitive electronic components from high-temperature gases and particles. By directing vented gases away from control electronics, sensors, and wiring, the risk of thermal damage, corrosion, and electrical short circuits is significantly reduced. Additionally, controlled gas flow reduces randomized venting behavior, allowing for predictable thermal event management and improved safety in enclosed battery environments, such as those found in electric vehicles.

Optionally, in some examples, including in at least one preferred example, the vent of each battery cell is positioned on a side opposite to electrical terminals of the battery cell. A technical benefit may include minimized electrical failure risks by ensuring that vented gases and ejected particles are released away from high-voltage connections, thereby preventing arcing, short circuits, or conductive pathways forming due to ionized gases or metallic debris.

Optionally, in some examples, including in at least one preferred example, the breakable openings of the first compartment comprise a breakable layer having a portion configured to rupture when subjected to high-velocity particles and/or high-pressure gas ejected from the battery cells during a thermal runaway event. A technical benefit may include precise and controlled activation of the venting system only when critical pressure and thermal conditions are met, thereby preventing unintended venting during normal operation. The breakable layer ensures that hot gases and debris are contained within a controlled pathway, reducing the likelihood of battery housing deformation or external component damage.

Optionally, in some examples, including in at least one preferred example, the phase change material in the second compartment comprises a dielectric material configured to absorb heat. A technical benefit may include efficient thermal mitigation through the latent heat absorption properties of the dielectric phase change material (PCM), which helps to prevent excessive temperature rise and suppress fire propagation. Additionally, as the material is dielectric, it provides electrical insulation, ensuring that high-energy discharges do not propagate beyond the affected area.

Optionally, in some examples, including in at least one preferred example, the dielectric material is a hydrated salt-based composition. A technical benefit may include enhanced thermal absorption efficiency, as hydrated salt-based PCMs are known for their high latent heat capacity, which allows for significant thermal energy storage and controlled dissipation. Additionally, when exposed to heat, hydrated salts can release water vapor, which further aids in cooling and reducing combustion risks during a thermal runaway event.

Optionally, in some examples, including in at least one preferred example, the battery housing further comprises at least one breather valve disposed in an outer wall of the first compartment to allow controlled pressure equalization between the first compartment and the external environment. A technical benefit may include prevention of pressure buildup within the first compartment. The breather valve allows for safe gas exchange, minimizing moisture ingress and ensuring long-term battery performance stability, especially in fluctuating environmental conditions.

Optionally, in some examples, including in at least one preferred example, the battery housing further comprises at least one combined breather valve and vent unit disposed in an outer wall of the first compartment and configured to allow controlled pressure equalization between the first compartment and the external environment and to release gas in the event of thermal runaway. A technical benefit may include a dual-function safety mechanism that ensures continuous pressure stabilization while also enabling emergency gas evacuation if thermal runaway occurs. This integrated solution simplifies battery design by reducing the need for separate pressure relief and venting components.

Optionally, in some examples, including in at least one preferred example, the battery housing further comprises a structural cooling plate separating the plurality of battery cells into at least two stacks, the structural cooling plate being configured to act as a heat sink for the battery cells during charge and discharge cycles. A technical benefit may include uniform thermal management across multiple cell stacks, preventing localized overheating and enabling higher energy efficiency and battery lifespan by dissipating excess heat generated during operation.

Optionally, in some examples, including in at least one preferred example, the structural cooling plate comprises a thermal interface material. A technical benefit may include optimized heat transfer efficiency by ensuring minimal thermal resistance between the cooling plate and the battery cells, improving thermal regulation and heat dissipation performance.

Optionally, in some examples, including in at least one preferred example, the thermal interface material is disposed between the structural cooling plate and an adjacent surface of the battery cell and configured to enhance thermal conductivity between the battery cell and the structural cooling plate. A technical benefit may include improved direct heat dissipation, ensuring that heat buildup is quickly transferred away from critical components, preventing thermal gradients that could degrade performance or cause localized overheating.

Optionally, in some examples, including in at least one preferred example, the thermal interface material is configured to bond the structural cooling plate to the first and second compartments, thereby providing both thermal conductivity and mechanical support within the battery housing. A technical benefit may include combined structural reinforcement and thermal performance, reducing assembly complexity and component weight, while ensuring that thermal energy is efficiently conducted away from the cells.

Optionally, in some examples, including in at least one preferred example, the thermal interface material extends along the length of the structural cooling plate to uniformly dissipate heat from the adjacent battery cells during charge and discharge cycles. A technical benefit may include even thermal distribution along the entire cooling structure, preventing hot spots that can cause battery cell degradation and performance inconsistencies.

Optionally, in some examples, including in at least one preferred example, at least a portion of a wall between the first compartment and the second compartment is configured to collapse during thermal runaway to allow release of gas from the first compartment to the second compartment. A technical benefit may include controlled expansion of the venting pathway, ensuring that gases are safely redirected into the heat-absorbing phase change material compartment for passive heat mitigation.

Optionally, in some examples, including in at least one preferred example, the collapsible opening between the first compartment and the second compartment is configured to promote release of the phase change material during a thermal runaway event. A technical benefit may include enhanced engagement of the PCM, allowing it to spread efficiently over affected areas, ensuring maximum heat absorption and minimization of fire risks.

According to a second aspect of the disclosure, it is provided a vehicle comprising a battery housing as described in any one of the preceding examples. A technical benefit may include integration of an advanced thermal management system into electric vehicles, significantly improving safety, reliability, and performance, reducing battery fire risks, and enabling longer battery life under high-demand conditions.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary battery housing illustrating a mounting plate, battery disconnect units, and a sliding mechanism according to an example.
FIGS. 2A-B are details of exemplary battery housings illustrating guiding brackets and a cross beam according to an example.
FIGS. 3A-B are exemplary illustrations of details of a mounting plate and a battery housing according to an example.
FIGS. 4A-B are exemplary illustrations showing details of a mounting plate and a battery housing according to an example.
FIGS. 5A-C are exemplary illustrations of a high voltage output terminal of an energy storage system, according to an example.
FIG. 6 is a vehicle comprising an energy storage system according to an example.

### DETAILED DESCRIPTION

The detailed description set forth below provides information and examples of the disclosed technology with sufficient detail to enable those skilled in the art to practice the disclosure.

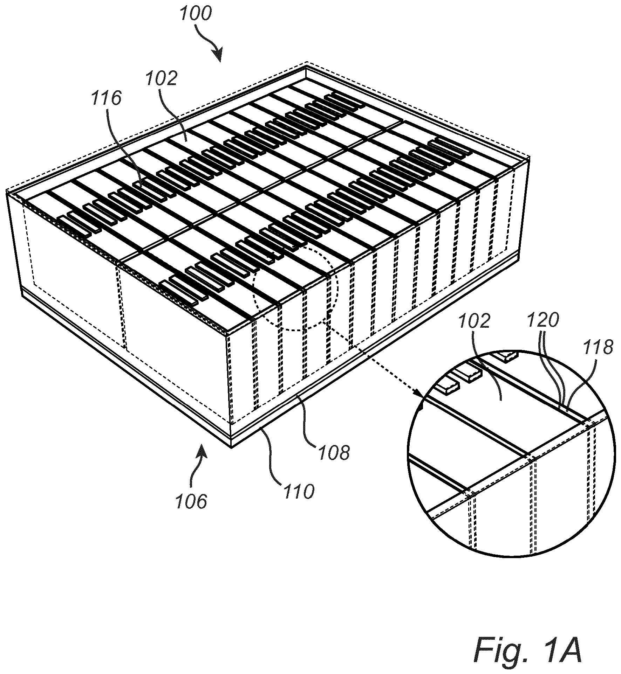

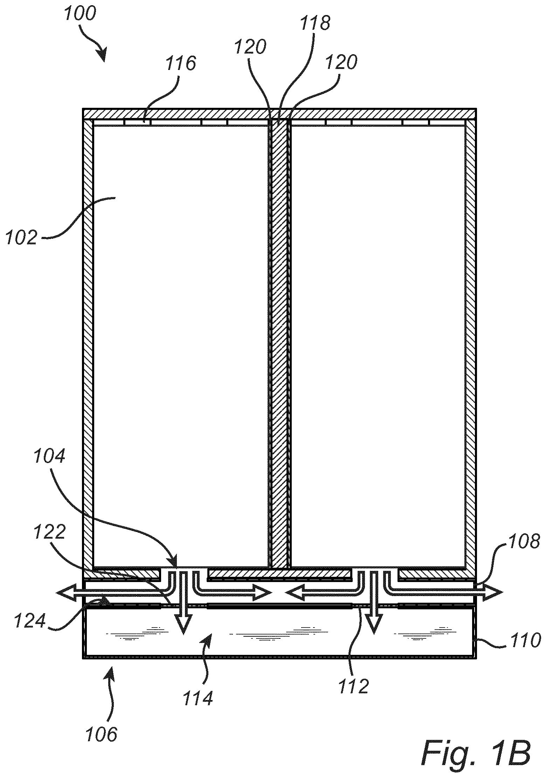

Fig. 1A schematically illustrates an exemplary battery housing 100, comprising a plurality of battery cells 102, and Fig. 1B is a cross-section view of the battery housing 100.

**In** Fig. 1B it is shown that each battery cell 102 has a vent 104 positioned to face a first side 106 of battery housing 100 for releasing exhaust gas during a thermal runaway event. In the present example, the first side 106 is illustrated as the bottom side of the battery housing 100. The battery housing 100 further comprises a first compartment 108 disposed adjacent to vents 104 of battery cells 102, first compartment 108 being air-filled.

A second compartment 110 is located adjacent to the first compartment 108, on a side of first compartment 108 opposite first side 106 facing the vents 104 of the battery cells 102. The first compartment 108 is thereby located between the battery cells 102 and the second compartment 110. The second compartment 110 is in fluid communication with the first compartment 108 via breakable openings 112 located between first compartment 108 and second compartment 110. Breakable openings 112 may be formed as membranes configured to rupture when exposed to pressure from exhaust gas or when impacted by high-velocity particles and/or high-pressure gas ejected from battery cells 102.

The second compartment 110 comprises a phase change material 114 configured to be activated when high-velocity gas and particles ejected from battery cells 102 break through breakable openings 112. The phase change material 114 is further configured to absorb heat and trap particles from exhaust gas released during a thermal runaway event.

The first compartment 108 and the second compartment 110 are here positioned at the bottom of battery housing 100 to facilitate downward venting and containment of thermal runaway effects. However, the first compartment 108 and the second compartment 110 may alternatively be positioned on any side of battery housing 100 depending on the packaging constraints and design requirements of the battery pack.

Moreover, the first compartment 108 is configured to direct exhaust gases away from electronic components of the battery pack. During a thermal runaway event, battery cells 102 release exhaust gas, which may contain fine solid or liquid particles in addition to high-temperature gases. The first compartment 108 provides a controlled pathway for exhaust gas and particles, ensuring that they are guided toward a designated venting direction instead of dispersing unpredictably within battery housing 100. By redirecting exhaust gas flow, the first compartment 108 minimizes the risk of exposure to sensitive electronic components.

Furthermore, the vents 104 of battery cells 102 are positioned on a side opposite to electrical terminals 116 of battery cells 102 which are here located at the top of the battery housing 100. This configuration ensures that vented gases and particles are released in a direction away from electrical terminals 116, preventing contamination, corrosion, or conductive debris from accumulating near high-voltage connections. By physically separating venting pathways from electrical terminals 116, the likelihood of electrical arcing, short circuits, and insulation breakdown is significantly reduced, improving overall battery pack safety.

The breakable openings 112 of first compartment 108 comprise a breakable layer having a portion configured to rupture when subjected to high-velocity particles ejected from battery cells 102 during a thermal runaway event. The breakable layer is designed to withstand normal operating conditions but rupture rapidly when impacted by ejecta from a failing battery cell 102. This ensures that gases and particles are contained within the first compartment 108 until sufficient pressure and force trigger a controlled release into the second compartment 110.

The phase change material 114 in the second compartment 110 advantageously comprises a dielectric material configured to absorb heat and suppress the spread of flames. By utilizing a dielectric composition, the phase change material 114 prevents electrical conduction between components of battery housing 100, reducing the risk of electrical faults. Due to exhaust of gas, the second compartment 110 is low on oxygen, limiting combustion within the battery housing 100. Any flames generated during a thermal runaway event are likely to occur outside of the battery housing 100 once exhaust gases reach the more oxygen rich external environment. However, since the phase change material 114 is configured to absorb and dissipate heat from vented gases and particles before they exit battery housing 100, the risk of fire propagation and secondary ignition events is reduced. In some implementations, the phase change material 114 is a hydrated salt-based composition.

The battery housing 100 further comprises a structural cooling plate 118 separating the plurality of battery cells 102 into at least two stacks. The structural cooling plate 118 is configured to act as a heat sink for battery cells 102 during charge and discharge cycles, dissipating excess thermal energy generated by internal resistance and electrochemical reactions. By providing a thermally conductive interface between adjacent stacks of battery cells 102, structural cooling plate 118 helps to maintain uniform temperatures across the battery pack, preventing localized overheating that could accelerate battery degradation or increase the risk of thermal runaway.

The structural cooling plate 118 may comprise a thermal interface material 120 that enhances the efficiency of heat transfer between structural cooling plate 118 and battery cells 102. Thermal interface material 120 reduces thermal resistance at the interface, improving the dissipation of heat from battery cells 102 to structural cooling plate 118. This configuration allows structural cooling plate 118 to function more effectively as a heat sink, ensuring stable battery operation and prolonged cell lifespan.

The thermal interface material 120 is disposed between the structural cooling plate 118 and an adjacent surface of the battery cell 102 to enhance thermal conductivity between battery cell 102 and structural cooling plate 118. By filling microscopic gaps and imperfections between surfaces, the thermal interface material 120 ensures efficient thermal coupling, preventing heat buildup and improving overall heat dissipation across the battery pack.

Moreover, the thermal interface material 120 is further configured to bond the structural cooling plate 118 to first compartment 108 and second compartment 110, thereby providing the dual functionality of thermal conductivity and mechanical adhesion within battery housing 100, reducing the need for additional fasteners or adhesives, simplifying battery pack assembly while enhancing both thermal performance and structural integrity.

Thermal interface material 120 may extend along the length of structural cooling plate 118 to uniformly dissipate heat from adjacent battery cells 102 during charge and discharge cycles.

Fig. 1 further illustrates that at least a portion 122 of a wall 124 between first compartment 108 and second compartment 110 is configured to collapse during thermal runaway to allow release of gas from first compartment 108 to second compartment 110. This design prevents excessive pressure buildup within first compartment 108, ensuring that exhaust gases and particles are efficiently redirected to the second compartment 110 containing the phase change material 114 for heat absorption and containment. Furthermore, the phase change material 114 is protected from the external environment unless thermal runaway occurs.

The collapsible opening 112 between the first compartment 108 and the second compartment 110 is further configured to promote the release of phase change material 114 during a thermal runaway event. When the breakable openings 112 rupture due to high-velocity gas and particle impact, the collapsing wall portion 122 allows phase change material 114 to flow more effectively into areas where heat dissipation is needed. This improves the cooling efficiency of phase change material 114 and enhances the battery pack's ability to mitigate extreme thermal events.

In general, electrical control components of battery housing 100 are preferably arranged on the side of battery housing 100 adjacent to the electrical terminals 116 of battery cells 102.

The second compartment 110 may in an example implementation comprise a plurality of sub-compartments, with walls between sub-compartments configured to provide structural support to the battery housing 100. The inclusion of sub-compartments enhances the mechanical stability of second compartment 110 while ensuring that phase change material 114 remains evenly distributed. The structural reinforcement provided by sub-compartment walls prevents deformation of second compartment 110 during pressure changes or thermal events, maintaining the integrity of battery housing 100 under extreme conditions.

The structural cooling plate 118 may also include cooling channels configured to circulate a coolant fluid to enhance heat dissipation from battery cells 102. The circulation of coolant fluid actively removes heat from structural cooling plate 118, further improving the thermal management of battery housing 100. This liquid-cooling feature is particularly advantageous in high-power applications where passive cooling methods may be insufficient to maintain optimal battery performance. The ability to integrate cooling channels into structural cooling plate 118 allows for efficient cooling without significantly increasing the overall size or weight of battery housing 100.

The Second compartment 110 may also comprise an insulating layer disposed between the phase change material 114 and the outer walls of battery housing 100 to reduce heat transfer to surrounding components during a thermal runaway event. The insulating layer prevents excessive heat from escaping into adjacent vehicle structures, reducing the risk of thermal damage to nearby materials. By confining heat within second compartment 110, the insulating layer enhances the effectiveness of phase change material 114 and ensures that the thermal mitigation system operates efficiently without affecting external components.

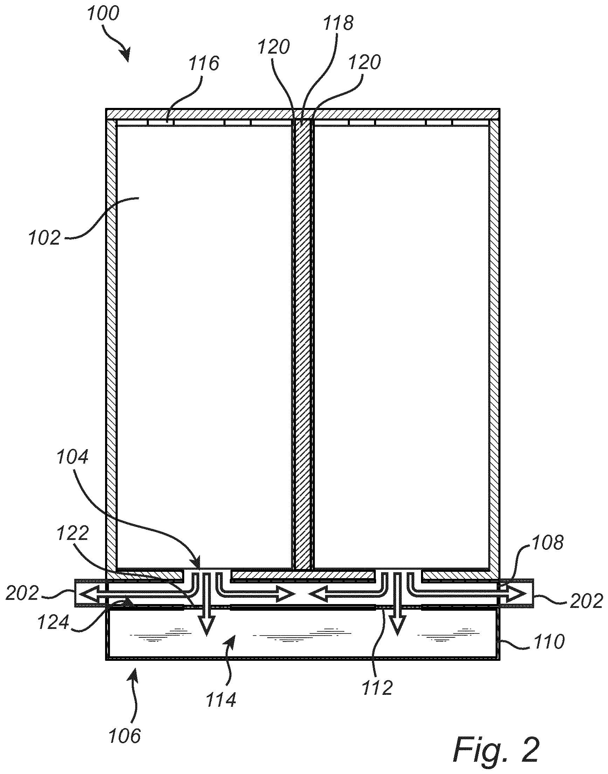

Fig. 2 illustrates an exemplary battery housing 100, further comprising at least one breather valve 202 disposed in an outer wall of the first compartment 108. The breather valve 202 is configured to allow controlled pressure equalization between the first compartment 108 and the external environment. The breather valve 202 may be a combined breather valve and vent unit disposed in the outer wall of the first compartment 108. The combined breather valve and vent unit is configured to perform both pressure equalization during normal operating conditions and controlled gas release in the event of thermal runaway.

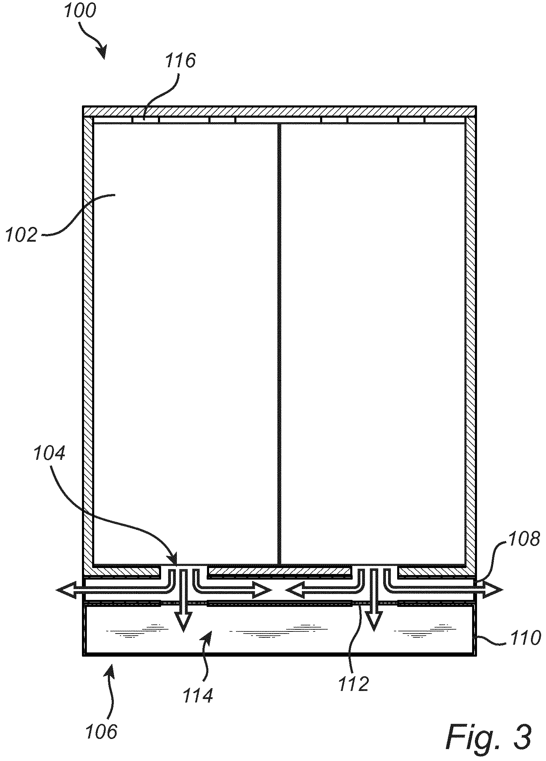

Fig. 3 illustrates an exemplary battery housing 100, comprising a plurality of battery cells 102. Each of the battery cells 102 has a vent 104 positioned to face a first side 106 of the battery housing 100 for releasing exhaust gas during a thermal runaway event. The first compartment 108 is disposed adjacent to the vents 104 of the battery cells 102, the first compartment 108 being air-filled. The first compartment 108 is configured to provide a space for initial gas expansion and controlled venting during a thermal runaway event. The second compartment 110 is adjacent to the first compartment 108, on a side of the first compartment 108 opposite the first side 106 facing the vents 104 of the battery cells 102. The second compartment 110 is in fluid communication with the first compartment 108 via breakable openings 112 located between the first compartment 108 and the second compartment 110. The breakable openings 112 allow for controlled gas and particle transfer between compartments during a thermal event. The second compartment 110 comprises a phase change material 114 configured to be activated when high-velocity particles ejected from the battery cells 102 break through the breakable openings 112. The phase change material 114 is further configured to absorb heat and trap particles released during a thermal runaway event, mitigating thermal propagation and enhancing safety of the battery housing 100.

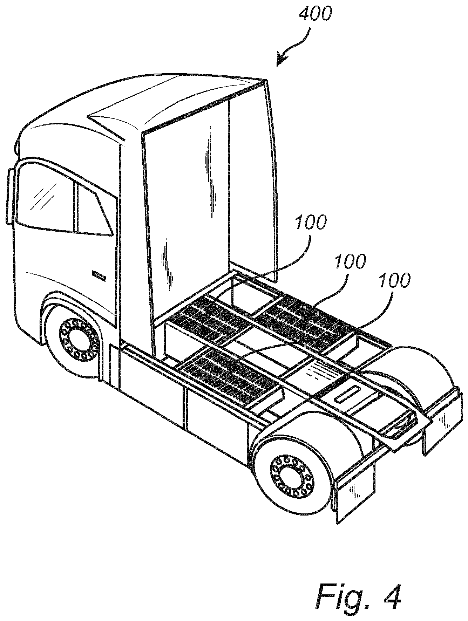

Fig. 4 illustrates a vehicle 400 comprising a battery housing 100. The battery housing 100 is configured according to any one of the preceding examples and is integrated within the vehicle 400 to provide electrical energy for propulsion and auxiliary systems. The vehicle 400 is operable using energy stored within the battery housing 100, with electrical connections linking the battery housing 100 to a powertrain or other energy-consuming systems of the vehicle 400. The configuration of the battery housing 100 within the vehicle 400 allows for reliable energy storage while incorporating safety features that mitigate risks associated with thermal runaway events.

Example 1. A battery housing (100) comprising: a plurality of battery cells (102), each battery cell having a vent (104) positioned to face a first side (106) of the battery housing for releasing exhaust gas during a thermal runaway event; a first compartment (108) disposed adjacent to the vents of the battery cells, the first compartment being air-filled; a second compartment (110) adjacent to the first compartment, on a side of the first compartment opposite the side facing the vents of the battery cells, and in fluid communication with the first compartment via breakable openings (112) located between the first compartment and the second compartment, wherein the second compartment comprises a phase change material (114) configured to be activated when high-velocity particles and/or high-pressure gas ejected from the battery cells break through the breakable openings, and to absorb heat and trap particles released during a thermal runaway event.

Example 2. The battery housing (100) according to example 1, wherein the first compartment (108) is configured to direct exhaust gases away from electronic components of the battery pack.

Example 3. The battery housing (100) according to example 1 or 2, wherein the vent (104) of each battery cell (102) is positioned on a side opposite to electrical terminals (116) of the battery cell.

Example 4. The battery housing (100) according to any one of the preceding examples, wherein the breakable openings (112) of the first compartment (108) comprise a breakable layer having a portion configured to rupture when subjected to high-velocity particles and/or high-pressure gas ejected from the battery cells (102) during a thermal runaway event.

Example 5. The battery housing (100) according to any one of the preceding examples, wherein the phase change material (114) in the second compartment (110) comprises a dielectric material configured to absorb heat.

Example 6. The battery housing (100) according to example 5, wherein the dielectric material is a hydrated salt-based composition.

Example 7. The battery housing (100) according to any one of the preceding examples, further comprising at least one breather valve (202) disposed in an outer wall of the first compartment (108) to allow controlled pressure equalization between the first compartment and the external environment.

Example 8. The battery housing (100) according to any one of examples 1 to 6, further comprising at least one combined breather valve and vent unit disposed in an outer wall of the first compartment (108) and configured to allow controlled pressure equalization between the first compartment and the external environment and to release gas in the event of thermal runaway.

Example 9. The battery housing (100) according to any one of the preceding examples, further comprising a structural cooling plate (118) separating the plurality of battery cells (102) into at least two stacks, the structural cooling plate being configured to act as a heat sink for the battery cells during charge and discharge cycles.

Example 10. The battery housing (100) according to example 9, wherein the structural cooling plate comprises a thermal interface material (120).

Example 11. The battery housing (100) according to example 10, wherein the thermal interface material is disposed between the structural cooling plate and an adjacent surface of the battery cell (102) and configured to enhance thermal conductivity between the battery cell and the structural cooling plate.

Example 12. The battery housing (100) according to example 10 or 11, wherein the thermal interface material is configured to bond the structural cooling plate to the first and second compartments, thereby providing both thermal conductivity and mechanical support within the battery housing (100).

Example 13. The battery housing (100) according to any one of examples 10 to 12, wherein the thermal interface material extends along the length of the structural cooling plate to uniformly dissipate heat from the adjacent battery cells (102) during charge and discharge cycles.

Example 14. The battery housing (100) according to any one of the preceding examples, wherein at least a portion of a wall between the first compartment and the second compartment is configured to collapse during thermal runaway to allow release of gas and particles from the first compartment to the second compartment.

Example 15. The battery housing (100) according to example 14, wherein the collapsible opening between the first compartment and the second compartment is configured to promote release of the phase change material during a thermal runaway event.

Example 16. The battery housing (100) according to any one of the preceding examples, wherein electrical control components of the battery housing are arranged on the side of the battery housing adjacent to the electrical terminals of the battery cell.

Example 17. The battery housing (100) according to any one of the preceding examples, wherein the second compartment (110) comprises a plurality of sub-compartments and wherein walls between sub-compartments are configured to provide structural support to the battery housing.

Example 18. The battery housing (100) according to example 7 or any of the examples dependent thereon, wherein the structural cooling plate (118) includes cooling channels configured to circulate a coolant fluid to enhance heat dissipation from the battery cells (102).

Example 19. The battery housing (100) according to any one of the preceding examples, wherein the second compartment (110) comprises an insulating layer disposed between the phase change material (114) and the outer walls of the battery housing to reduce heat transfer to surrounding components during a thermal runaway event.

Example 20. A vehicle (400) comprising a battery housing (100) according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100) comprising:
a plurality of battery cells (102), each battery cell having a vent (104) positioned to face a first side (106) of the battery housing for releasing exhaust gas during a thermal runaway event;
a first compartment (108) disposed adjacent to the vents of the battery cells, the first compartment being air-filled; and
a second compartment (110) adjacent to the first compartment, on a side of the first compartment opposite the side facing the vents of the battery cells, and in fluid communication with the first compartment via breakable openings (112) located between the first compartment and the second compartment, wherein the second compartment comprises a phase change material (114) configured to be activated when high-velocity particles and/or high-pressure gas ejected from the battery cells break through the breakable openings, and to absorb heat and trap particles released during a thermal runaway event.

2. The battery housing (100) according to claim 1, wherein the first compartment (108) is configured to direct exhaust gases away from electronic components of the battery pack.

3. The battery housing (100) according to claim 1 or 2, wherein the vent (104) of each battery cell (102) is positioned on a side opposite to electrical terminals (116) of the battery cell.

4. The battery housing (100) according to any one of the preceding claims, wherein the breakable openings (112) of the first compartment (108) comprise a breakable layer having a portion configured to rupture when subjected to high-velocity particles and/or high-pressure gas ejected from the battery cells (102) during a thermal runaway event.

5. The battery housing (100) according to any one of the preceding claims, wherein the phase change material (114) in the second compartment (110) comprises a dielectric material configured to absorb heat.

6. The battery housing (100) according to claim 5, wherein the dielectric material is a hydrated salt-based composition.

7. The battery housing (100) according to any one of the preceding claims, further comprising at least one breather valve (202) disposed in an outer wall of the first compartment (108) to allow controlled pressure equalization between the first compartment and the external environment.

8. The battery housing (100) according to any one of claims 1 to 6, further comprising at least one combined breather valve and vent unit disposed in an outer wall of the first compartment (108) and configured to allow controlled pressure equalization between the first compartment and the external environment and to release gas in the event of thermal runaway.

9. The battery housing (100) according to any one of the preceding claims, further comprising a structural cooling plate (118) separating the plurality of battery cells (102) into at least two stacks, the structural cooling plate being configured to act as a heat sink for the battery cells during charge and discharge cycles.

10. The battery housing (100) according to claim 9, wherein the structural cooling plate comprises a thermal interface material (120).

11. The battery housing (100) according to claim 10, wherein the thermal interface material is disposed between the structural cooling plate and an adjacent surface of the battery cell (102) and configured to enhance thermal conductivity between the battery cell and the structural cooling plate.

12. The battery housing (100) according to claim 10 or 11, wherein the thermal interface material is configured to bond the structural cooling plate to the first and second compartments, thereby providing both thermal conductivity and mechanical support within the battery housing (100).

13. The battery housing (100) according to any one of the preceding claims, wherein at least a portion of a wall between the first compartment and the second compartment is configured to collapse during thermal runaway to allow release of gas and particles from the first compartment to the second compartment.

14. The battery housing (100) according to any one of the preceding claims, wherein the second compartment (110) comprises a plurality of sub-compartments and wherein walls between sub-compartments are configured to provide structural support to the battery housing.

15. A vehicle (400) comprising a battery housing (100) according to any one of the preceding claims.
